# EUROPEAN PATENT APPLICATION

(11) **EP 2 957 868 A1**
(43) Date of publication of application: **23.12.2015**
(21) Application number: 15170089.5
(22) Date of filing: 01.06.2015
(51) Int. Cl.: G01C 21/20, G01C 21/30, G08G 1/123

(54) **APPARATUS AND METHOD FOR DETECTING NODES OF TRANSPORTATION**

(30) Priority: 17.06.2014 US 201414307452
(71) Applicant: LG CNS Co., Ltd., Yeongdeungpo-gu Seoul 150-881 (KR)
(72) Inventor: Min, Kyong Hoon, 150-881 Seoul (KR)
(74) Representative: V.O.

(57) **Abstract**

A method includes determining an original location of a vehicle providing a transportation service using location information of the vehicle, determining a virtual location of the vehicle corresponding to the original location by mapping the original location to a travel route of the vehicle, determining a location section among a plurality of sections of the travel route, the location section including the virtual location of the vehicle, determining, as a nearby node of the vehicle, a node in which a distance to the virtual location is less than a threshold value among one or more nodes included in the location section.

## Description

### BACKGROUND

The background section provided herein is for the purpose of generally presenting the context of the disclosure. Work of the presently named inventors, to the extent the work is described in this section, as well as aspects of the description that may not otherwise qualify as prior art at the time of filing, are neither expressly nor impliedly admitted as prior art against the present disclosure.

Research has recently been conducted on systems for managing transportation service information. Transportation service information refers to information on routes, locations, estimated arrival times, service times, and operation intervals of vehicles providing transportation services. For example, Korean Patent Application Laid-Open No. 10-2006-0091705 discloses a system and method for providing bus information. However, it is difficult to accurately obtain such information.

### SUMMARY

Various embodiments in accordance with the present disclosure are directed to accurately detecting stations of transportation.

In addition, various embodiments in accordance with the present disclosure are directed to accurately matching locations of vehicles to routes of the vehicles.

Furthermore, various embodiments in accordance with the present disclosure are directed to accurately detecting stations of transportation even in the event of a deficiency in GPS data.

Moreover, various embodiments in accordance with the present disclosure are directed to intuitive display of locations of vehicles and conditions of transportation services.

A method of detecting nodes of transportation in accordance with an embodiment includes determining an original location of a vehicle providing a transportation service using location information of the vehicle, determining a virtual location of the vehicle corresponding to the original location by mapping the original location to a travel route of the vehicle, determining a location section among a plurality of sections of the travel route, the location section including the virtual location of the vehicle, and determining, as a nearby node of the vehicle, a node in which a distance to the virtual location is less than a threshold value among one or more nodes included in the location section.

In a method in accordance with an embodiment, the original location of the vehicle is determined using a travel distance of the vehicle that is calculated based on speed information of the vehicle output from an electronic control unit (ECU) of the vehicle.

A method in accordance with an embodiment, further comprises determining whether there is a deficiency in GPS data, and if there is a deficiency in GPS data, determining the original location based on ECU information output from an ECU of the vehicle, the ECU information including a travel speed of the vehicle.

In a method in accordance with an embodiment, determining the original location based on the ECU information comprises determining the original location using a global positioning system (GPS) deficiency duration and the travel speed of the vehicle during the GPS deficiency duration, the GPS deficiency duration corresponding to a time period during which a receiving power of a GPS signal is less than or equal to a threshold value.

In a method in accordance with an embodiment, the virtual location is an orthogonal projection of the original location on the travel route.

In a method in accordance with an embodiment, the plurality of location sections includes at least one of a first section between a first intersection and a first station adjacent to the first intersection, a second section between the first intersection and a second intersection adjacent to the first intersection, and a third section between the first station and a second station adjacent to the first station.

In a method in accordance with an embodiment, the one or more nodes include any of a station and an intersection, and the one or more nodes are retrieved in a sequential order of a station located behind the vehicle in the travel route, a station ahead of the vehicle in the travel route, an intersection located behind the vehicle in the travel route, and an intersection located ahead of the vehicle in the travel route, and a direction of the travel route corresponds to a direction of travel of the vehicle.

A method in accordance with an embodiment further comprises displaying any of an electronic map, which includes the travel route and the virtual location of the vehicle, and a simplified travel route including the virtual location of the vehicle.

A method in accordance with an embodiment, further comprises displaying condition information on at least one of the electronic map and the simplified travel route. The condition information indicates at least one of a normal operation, a random delay during operation, a route deviation, a long delay, an early operation, an accident, a route entry of an unidentified vehicle, and occurrence or non-occurrence of a deficiency in GPS data.

According to various embodiments, stations of transportation can be accurately detected.

In addition, according to various embodiments, locations of vehicles can be accurately matched with routes of the vehicles.

Furthermore, stations of transportation can be accurately detected even in the event of a deficiency in GPS data.

Moreover, locations of vehicles and conditions of transportation services can be intuitively displayed.

### BRIEF DESCRIPTION OF THE DRAWINGS

FIG. 1 is a flowchart illustrating a method of detecting nodes of transportation according to an embodiment.
FIG. 2 is a diagram illustrating a plurality of sections of a transportation route divided according to an embodiment.
FIG. 3 is a diagram illustrating a process of detecting nodes of transportation according to an embodiment.
FIG. 4 is a diagram illustrating transportation information displayed according to an embodiment.
FIG. 5 is a block diagram illustrating a node detection apparatus according to an embodiment.

### DESCRIPTION OF SPECIFIC EMBODIMENTS

Hereafter, embodiments of the present disclosure will be described with reference to the accompanying drawings. Throughout the drawings, like reference numerals refer to like parts.

The following embodiments may be modified in various manners. One of skill in the art will recognize that embodiments are not limited by the descriptions specifically disclosed herein, but may include modifications, equivalents or substitutes thereof.

The terms used to describe embodiments are used for the purpose of explaining the specific embodiment, and do not limit embodiments. Terms referring to a feature of an embodiment in a singular form do not exclude the possibility of plural forms unless the contrary is indicated. In this specification, the meaning of "include/comprise" or "have" specifies a property, a figure, a step, a process, an element, a component, or a combination thereof which is described in the specification, but does not exclude one or more other properties, numbers, steps, processes, elements, components, or combinations thereof.

Terms used herein having a technical or scientific meaning may have the same meaning as the term as generally understood by those skilled in the art to which the present disclosure pertains, unless the contrary is specifically indicated or made clear from the context of the use of the term. Terms that may be defined in a general dictionary may be interpreted to have meanings which coincide with their contextual meanings. Unless clearly defined in this specification, terms should not be interpreted as having excessively formal or technical meaning.

In the accompanying drawings, like reference numerals refer to like elements and duplicative descriptions thereof may be omitted. In addition, detailed descriptions related to well-known functions or configurations may be omitted so that the subject matter of the present disclosure is not unnecessarily obscured.

In the present disclosure, nodes of transportation include locations on a route of transportation, such as stations of transportation or intersections, through which a vehicle providing transportation services travels. Vehicles that provide transportation services may include buses, trains, electric cars, rail motors, electric motors, electric railways, subways, trams, automobiles, two-wheeled vehicles, vehicles, airplanes, and the like, which travel through predefined travel routes. Travel routes may be used herein to refer to transportation routes of such vehicles.

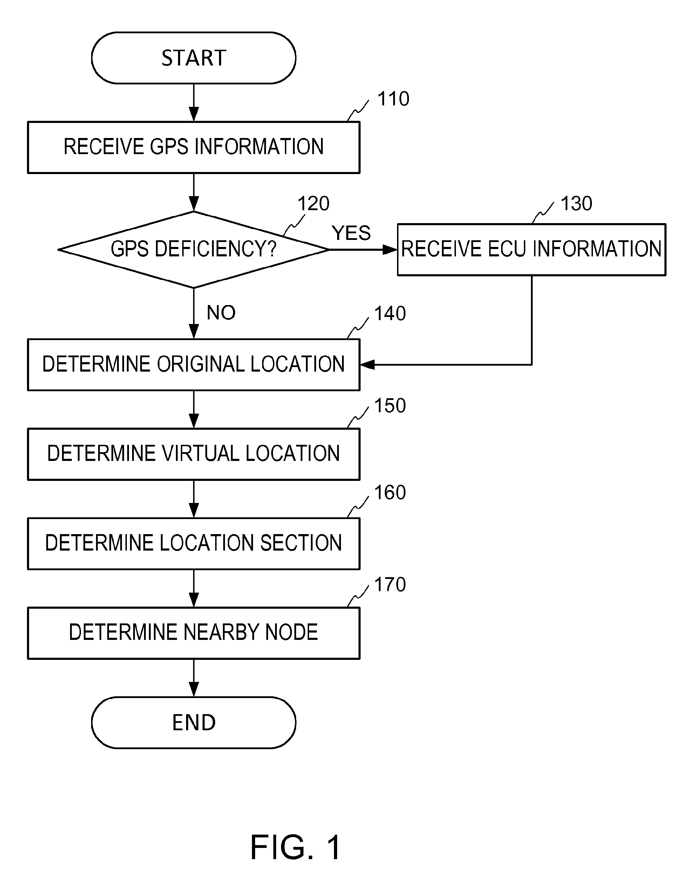

FIG. 1 is a flowchart illustrating a method for detecting nodes of transportation according to an embodiment.

Referring to FIG. 1, at step 110, a node detection apparatus receives GPS information on a location of a vehicle. The node detection apparatus may receive the GPS information from a communication device provided in the vehicle. The GPS information may include a two-dimensional or three-dimensional coordinate value indicating the location of the vehicle.

At step 120, the node detection apparatus determines occurrence or non-occurrence of a deficiency in GPS information. The node detection apparatus may measure the receiving power of the GPS. In an embodiment, the node detection apparatus may determine whether the receiving power of the GPS is less than or equal to a predetermined threshold value. In addition, the node detection apparatus may record a GPS deficiency duration during which the receiving power is less than or equal to the threshold value.

If it is determined that the deficiency occurred in the GPS information, i.e., the receiving power is less than or equal to the threshold value, at step 130, the node detection apparatus receives information output from an electronic control unit (ECU) of the vehicle. The node detection apparatus may receive speed information indicating the speed of the vehicle, which is output from the ECU. The node detection apparatus may receive ECU information through the communication device provided in the vehicle. In addition, the node detection apparatus may record the speed of the vehicle during the GPS deficiency duration.

If it is determined that the deficiency did not occur in the GPS information, i.e., the receiving power is greater than the threshold value, at step 140, the node detection apparatus determines an original location of the vehicle by using the location information of the vehicle. In an embodiment, the node detection apparatus may determine the original location of the vehicle based on the received GPS information of the vehicle.

In the event of a deficiency in GPS information, the node detection apparatus may calculate a distance traveled by the vehicle (herein, "a travel distance"), based on the ECU information of the vehicle. The ECU information may include the speed of the vehicle. In an embodiment, the node detection apparatus may determine the original location of the vehicle using the calculated travel distance of the vehicle.

For example, when the GPS deficiency duration is 10 seconds and the average travel speed of the transportation during the GPS deficiency duration is 60 km/h, the travel distance of the vehicle during the GPS deficiency duration may be calculated as 167 m. In addition, the original location of the vehicle may be estimated as a location that is determined by the estimated travel distance from the location of the vehicle determined prior to the GPS deficiency. In addition, it may be estimated that the vehicle has been moved by the estimated travel distance in a direction along the travel route.

At step 150, the node detection apparatus determines a virtual location of the vehicle. The virtual location refers to a location at which the original location of the transportation is mapped to the travel route of the vehicle. That is, the node detection apparatus may determine a virtual location corresponding to the original location by mapping the original location to the travel route of the vehicle. The virtual location may be an orthogonal projection of the original location on the travel route.

At step 160, the node detection apparatus determines a location section of the virtual location on a travel route. The node detection apparatus may determine the location section to which the virtual location belongs among a plurality of sections, which are defined by dividing the travel route according to characteristics of the sections.

For example, the plurality of sections may include at least one of a first section between a first intersection and a first station adjacent to the first intersection, a second section between the first intersection and a second intersection adjacent to the first intersection, and a third section between the first station and a second station adjacent to the first station.

The location section refers to a section where the vehicle is located according to the mapped virtual location, from among a plurality of sections. That is, the vehicle may be in one section according to the virtual location of the vehicle.

At step 170, the node detection apparatus determines a node near the vehicle. The plurality of sections may include at least one node. In an embodiment, the node detection apparatus may determine, as the nearby node, a node from which the distance to the virtual location is less than a threshold value.

In order to determine the adjacent node, the apparatus for detecting nodes of transportations may retrieve one or more nodes included in the adjacent node in order of a station located in a backward direction, a station located in a forward direction, an intersection located in the backward direction, and an intersection located in the forward direction, with respect to the travel direction of the transportation. The apparatus for detecting nodes of transportations may determine, as the adjacent node, a node located within a predetermined threshold value among the sequentially retrieved nodes.

In an embodiment, the node detection apparatus displays a map on which the travel route and the virtual location of the vehicle are indicated. In an embodiment, the node detection apparatus displays a simplified travel route on which the virtual location of the vehicle is indicated. In order to indicate the condition of transportation services, the node detection apparatus may display condition information. For example, the node detection apparatus may display the condition of transportation services on the electronic map or the simplified travel route. The condition information of the transportation services may include an indicator indicating a normal operation, a random delay during operation, a route deviation, a long delay, a service being provided sooner than scheduled, the vehicle's travel on the route occurring more quickly than scheduled, an accident or route entry of an unidentified vehicle, an occurrence or non-occurrence of GPS deficiency, or a combination thereof.

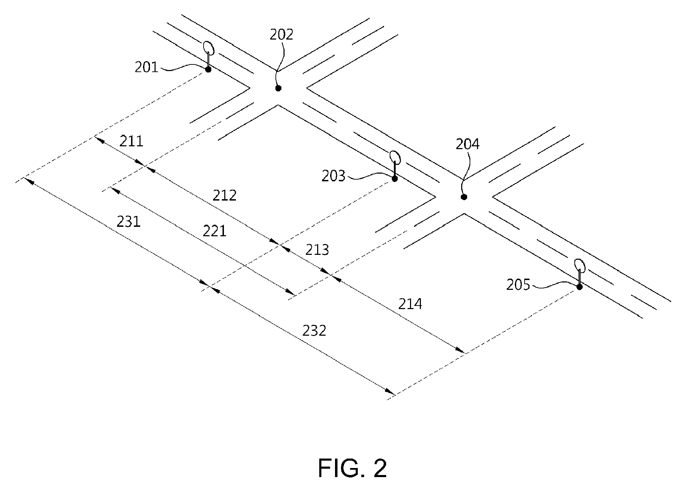

FIG. 2 is a diagram illustrating a plurality of sections divided according to characteristics of the sections according to an embodiment.

Referring to FIG. 2, a travel route is divided into first sections 211, 212, 213 and 214, a second section 221, and third sections 231 and 232.

Each of the first sections 211, 212, 213 and 214 is a section between an intersection and a station adjacent to the intersection. For example, the first sections 211, 212, 213 and 214 are a section between a station 201 and an intersection 202, a section between the intersection 202 and a station 203, a section between the station 203 and an intersection 204, and a section between the intersection 204 and a station 205, respectively.

The second section 221 is a section between adjacent intersections. For example, the second section 221 is a section between the intersection 202 and the intersection 204.

Each of the third sections 231 and 232 is a section between adjacent stations. For example, the third sections 231 and 232 are a section between the station 201 and the station 203 and a section between the station 203 and the station 205, respectively.

The node detection apparatus may improve the accuracy of detecting the nodes of transportation by dividing the travel route according to the characteristics of the sections.

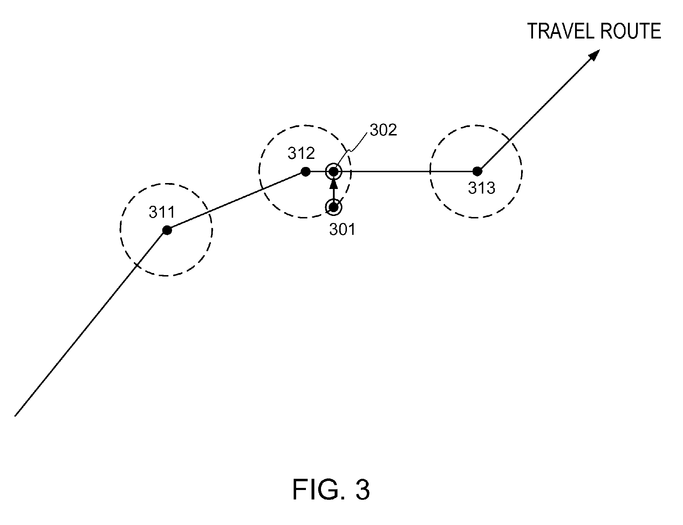

FIG. 3 is a diagram illustrating a process of detecting nodes of transportation according to an embodiment.

FIG. 3 illustrates an original location 301 of a vehicle, a virtual location 302 of the vehicle, and a plurality of nodes 311, 312 and 313 on a travel route. Dashed circles having the plurality of nodes 311, 312 and 313 as the center represent a predetermined threshold value for determining a nearby node.

The node detection apparatus may determine the original location 301 of the vehicle by using GPS information of the vehicle or ECU information of the vehicle.

The node detection apparatus may determine a point on the travel route nearest to the original location 301 of the vehicle as the virtual location 302 of the vehicle. For example, the node detection apparatus may determine an orthogonal projection of the original location 301 on the travel route as the virtual location 302 of the vehicle.

The node detection apparatus may determine a section between the node 312, which is nearest to the virtual location 302, and the node 313 as a location section of the vehicle, i.e., the section in which the vehicle is located. In addition, in an embodiment, since the virtual location 302 is within a distance that is less than a threshold value from the node 312, the node detection apparatus may determine the node 312 as the nearby node of the vehicle.

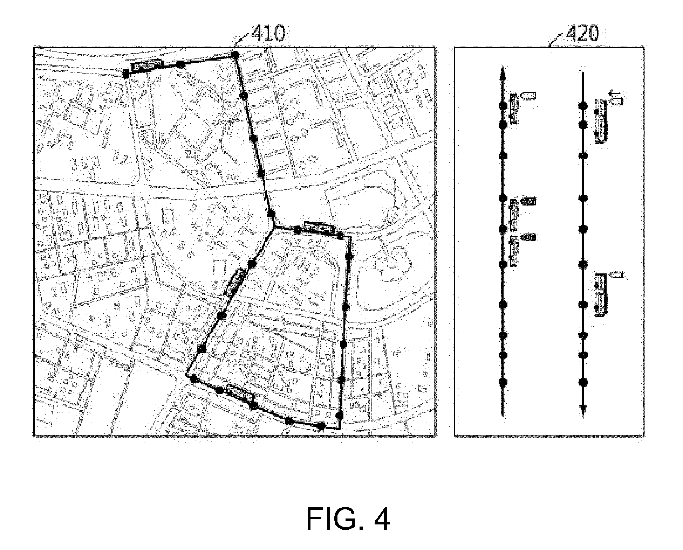

FIG. 4 is a diagram illustrating displayed transportation information in accordance with an embodiment. In an embodiment, the transportation information is displayed on a screen of a node detection apparatus. In an embodiment, displayed transportation information includes locations of vehicles and conditions of the transportation services.

FIG. 4 illustrates an electronic map 410 on which a travel route and a virtual location of transportation vehicle are indicated, and a simplified travel route 420 on which the virtual location of the vehicle is indicated.

The electronic map 410 may include roads, facilities, and geographical features around the travel route. That is, the electronic map 410 may indicate an actual travel route of the vehicle on a geographical map. The simplified travel route 420 may be a route obtained by simplifying the travel route of the vehicle while maintaining a node-to-node ratio.

Any one or both of the electronic map 410 and the simplified travel route 420 may include condition information of transportation services. The condition information may be displayed around the vehicle that is displayed on the electronic map 410 or the simplified travel route 420. The condition information may be displayed as an indicator, which indicates whether operation of the vehicle is normal, whether the vehicle experienced a random delay during operation, a route deviation of the vehicle, a long delay, service being provided sooner than scheduled, the vehicle's travel on the route occurring more quickly than scheduled, an accident or a route entry of an unidentified vehicle, occurrence or non-occurrence of GPS deficiency, or a combination thereof.

For example, a white indicator, a black indicator, and an indicator with an adjacent arrow added thereto are displayed near the vehicle that is displayed on the simplified travel route 420. In an embodiment, the white indicator may represent a normal operation, the black indicator may represent a route deviation, and the indicator with the adjacent arrow added thereto may represent an early operation.

A transportation operation administrator may intuitively recognize operation conditions of a plurality of vehicles providing transportation services through the electronic map 410 and the simplified travel route 420.

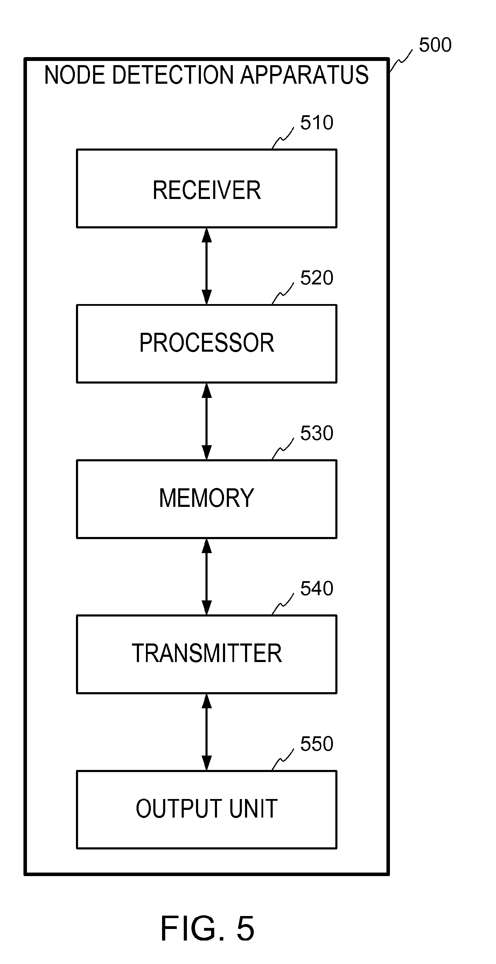

FIG. 5 is a flowchart illustrating a node detection apparatus according to an embodiment.

Referring to FIG. 5, a node detection apparatus 500 includes a receiver 510, a processor 520, a memory 530, and a transmitter 540. In addition, the node detection apparatus 500 may include an output unit 550.

The receiver 510 receives location information of vehicle. The location information of the vehicle includes GPS information. In addition, the receiver 510 may receive ECU information of the vehicle. The receiver 510 may receive GPS information and ECU information from the vehicle.

In an embodiment, the node detection apparatus 500 includes one or more non-transitory computer-readable media. For example, in an embodiment, a non-transitory computer-readable medium may be memory, such as random access memory (RAM), read-only memory (ROM), or a higher capacity storage. Such memory is indicated in FIG. 5 as memory 530. However, embodiments are not limited thereto, and other forms of computer-readable media may be implemented in accordance with an embodiment. Memory 530 may have stored thereon computer-executable instructions, which, when executed, causes one or more processors 520 to perform various operations for detecting a node of transportation. In an embodiment, the executable instructions include instructions to perform operations in accordance with embodiments described with reference to FIGS. 1 to 4 above.

The processor 520 determines an original location of the vehicle by using the location information of the vehicle. The processor 520 may determine the original location by using a travel distance of the vehicle, which is calculated based on speed information of the vehicle that is output from an ECU of the vehicle.

In the event of GPS deficiency, the processor 520 may calculate the travel distance of the vehicle, based on the ECU information of the vehicle. The ECU information may include the speed of the vehicle during the GPS deficiency. The node detection apparatus 500 may determine the original location of the vehicle using the calculated travel distance of the vehicle. That is, the processor 520 may determine the original location by using a GPS deficiency duration, during which a receiving power of a GPS signal is less than or equal to a threshold value, and a travel speed of the vehicle during the GPS deficiency duration.

In addition, the processor 520 determines a virtual location corresponding to the original location by mapping the original location to a travel route of the vehicle. The virtual location may be an orthogonal projection of the original location on the travel route.

In addition, the processor 520 determines a section to which the virtual location belongs among a plurality of sections of the travel route. Sections of the travel route are defined by dividing the travel route according to characteristics of the sections. The plurality of sections may include at least one of a first section between a first intersection and a first station adjacent to the first section, a second section between the first intersection and a second intersection adjacent to the first intersection, and a third section between the first station and a second station adjacent to the first station.

A location section refers to a section in which the vehicle is included among the plurality of sections. That is, the vehicle may be located in one section according to the virtual location of the vehicle.

In addition, the processor 520 determines, as a nearby node of the vehicle, a node in which the distance to the virtual location is less than a threshold value among one or more nodes included in the location section.

In order to determine the nearby node, the processor 520 may retrieve one or more nodes included in the location section. The nodes may be retrieved in a sequential order based on the direction of travel of the vehicle. For example, the nodes may be retrieved in order of a node located behind the vehicle on the travel route, a node located ahead of the vehicle on the travel route, an intersection located behind the vehicle on the travel route, and an intersection located ahead of the vehicle on the travel route. The node detection apparatus 500 may determine, as the nearby node, a node located at a distance that is less than the threshold value from among the sequentially retrieved nodes.

The memory 530 may store information including at least one piece of information associated with one or more of the original location, the virtual location, the location section, and the nearby node of the vehicle. The memory 530 may store the GPS deficiency duration, and the travel distance of the vehicle during the GPS deficiency duration.

The transmitter 540 may transmit, to the vehicle, at least one piece of information associated with the original location, the virtual location, the location section, and the nearby node of the vehicle.

The output unit 550 outputs transportation information to a user. In an embodiment, the output unit 550 includes a display screen and outputs transportation information in a visual format. However, embodiments are not limited thereto. The output unit 550 may output information in an audio format or as haptic feedback in addition to the visual format, or as a combination thereof.

In an embodiment, the output unit 550 displays an electronic map on which the travel route and the virtual location are indicated, and/or a simplified travel route on which the virtual location is indicated. In order to indicate the condition of transportation services, the output unit 550 may display condition information on the electronic map or the simplified travel route. The condition information may include an indicator indicating a normal operation, a random delay during operation, a route deviation, a long delay, an early operation, an accident, a route entry of an unidentified vehicle, an occurrence or non-occurrence of GPS deficiency, or a combination thereof.

Methods according to embodiments of the present disclosure may be implemented in the form of program commands which can be executed through various computer units, and then written to computer readable media. The computer readable media may include a program command, a data file, a data structure, or a combination thereof. Examples of the computer readable media may include magnetic media such as a hard disk, a floppy disk and a magnetic tape, optical media such as CD-ROM and DVD, magneto-optical media such as a floptical disk, and hardware devices, such as ROM, RAM and flash memory, configured to store and execute a program command. Examples of the program command may include a machine language code created by a compiler and a high-level language code executed by a computer through an interpreter or the like. The hardware device may be configured to operate as one or more software modules to perform the operation of the present invention, and vice versa.

While embodiments have been described, it will be apparent to those skilled in the art that various changes and modifications may be made without departing from the spirit and scope of the present invention. For example, appropriate results can be achieved even when the above-described technologies are performed in a different order from those described and/or even when elements such as described systems, structures, apparatuses, and circuits are connected or combined in a different form from those described or are replaced or substituted by other elements or equivalents.

Thus, the scope of the present invention is not limited to the above-described embodiments, but may be defined by the following claims and equivalents to the claims.

## Claims

1. A method of detecting nodes of transportation, comprising:
determining an original location of a vehicle providing a transportation service using location information of the vehicle;
determining a virtual location of the vehicle corresponding to the original location by mapping the original location to a travel route of the vehicle;
determining a location section among a plurality of sections of the travel route, the location section including the virtual location of the vehicle; and
determining, as a nearby node of the vehicle, a node in which a distance to the virtual location is less than a threshold value among one or more nodes included in the location section.

2. The method of claim 1, wherein the original location of the vehicle is determined using a travel distance of the vehicle that is calculated based on speed information of the vehicle output from an electronic control unit (ECU) of the vehicle.

3. The method of claim 1, further comprising:
determining whether there is a deficiency in GPS data; and
if there is a deficiency in GPS data, determining the original location based on ECU information output from an ECU of the vehicle, the ECU information including a travel speed of the vehicle.

4. The method of claim 3, wherein determining the original location based on the ECU information comprises determining the original location using a global positioning system (GPS) deficiency duration and the travel speed of the vehicle during the GPS deficiency duration, the GPS deficiency duration corresponding to a time period during which a receiving power of a GPS signal is less than or equal to a threshold value.

5. The method of claim 1, wherein the virtual location is an orthogonal projection of the original location on the travel route.

6. The method of claim 1, wherein the plurality of location sections includes at least one of a first section between a first intersection and a first station adjacent to the first intersection, a second section between the first intersection and a second intersection adjacent to the first intersection, and a third section between the first station and a second station adjacent to the first station.

7. The method of claim 1, wherein the one or more nodes include any of a station and an intersection, wherein the one or more nodes are retrieved in a sequential order of a station located behind the vehicle in the travel route, a station ahead of the vehicle in the travel route, an intersection located behind the vehicle in the travel route, and an intersection located ahead of the vehicle in the travel route, and
wherein a direction of the travel route corresponds to a direction of travel of the vehicle.

8. The method of claim 1, further comprising:
displaying any of an electronic map, which includes the travel route and the virtual location of the vehicle, and a simplified travel route including the virtual location of the vehicle.

9. The method of claim 8, further comprising:
displaying condition information on at least one of the electronic map and the simplified travel route,
wherein the condition information indicates at least one of a normal operation, a random delay during operation, a route deviation, a long delay, an early operation, an accident, a route entry of an unidentified vehicle, and occurrence or non-occurrence of a deficiency in GPS data.

10. A node detection apparatus, comprising:
a processor configured to:
determine an original location of a vehicle using location information of the vehicle;
determine a virtual location of the vehicle corresponding to the original location by mapping the original location to a travel route of the vehicle;
determine a location section among a plurality of sections of a travel route, the location section including the virtual location of the vehicle; and
determine, as a nearby node of the vehicle, a node in which a distance to the virtual location is less than a threshold value among one or more nodes included in the location section.

11. The apparatus of claim 10, wherein the processor determines the original location of the vehicle using a travel distance of the vehicle, the travel distance being calculated based on speed information of the vehicle output from an electronic control unit (ECU) of the vehicle.

12. The apparatus of claim 10, wherein the processor determines the original location of the vehicle by using a global positioning system (GPS) deficiency duration and a travel speed of the vehicle during the GPS deficiency duration,
wherein the GPS deficiency duration is a time period during which a receiving power of a GPS signal is less than or equal to a threshold value, and
wherein the travel speed of the vehicle is included in ECU information output from an ECU of the vehicle.

13. The apparatus of claim 10, wherein the one or more nodes include any of a station and an intersection,
wherein the processor retrieves the one or more nodes in a sequential order of a station located behind the vehicle on the travel route, a station located ahead of the vehicle on the travel route, an intersection located behind the vehicle on the travel route, and an intersection located ahead of the vehicle on the travel route,
wherein a direction of the travel route corresponds to a direction of travel of the vehicle.

14. The apparatus of claim 10, further comprising:
a display unit configured to display any of an electronic map, which includes the travel route and the virtual location of the vehicle, and a simplified travel route including the virtual location of the vehicle.

15. The apparatus of claim 14, wherein the display unit displays condition information, the condition information being displayed on at least one of the electronic map and the simplified travel route, and the condition information indicating one or more of a normal operation, a random delay during operation, a route deviation, a long delay, an early operation, a route entry of an unidentified vehicle, an accident, and occurrence or non-occurrence of GPS deficiency.
